# EUROPÄISCHE PATENTSCHRIFT

(11) **EP 3 009 380 B1**
(45) Veröffentlichungstag und Bekanntmachung des Hinweises auf die Patenterteilung: **26.09.2018**
(21) Anmeldenummer: 15177879.2
(22) Anmeldetag: 22.07.2015
(51) Int. Cl.: B65G 47/26, B65G 47/68, B65G 47/84, B65B 35/44, B65B 25/00

(54) **GRUPPIERUNGSVERFAHREN UND GRUPPIERUNGSVORRICHTUNG ZUM ERZEUGEN UND ZUSAMMENFÜHREN VON GRUPPEN VON ARTIKELN AUS EINER MEHRZAHL VON ARTIKELN**
GROUPING METHOD AND GROUPING DEVICE FOR GENERATING AND BRINGING TOGETHER GROUPS OF ITEMS FROM A PLURALITY OF ITEMS
PROCEDE DE REGROUPEMENT ET DISPOSITIF DE REGROUPEMENT DESTINES A PRODUIRE ET A RASSEMBLER DES GROUPES D'ARTICLES A PARTIR D'UNE PLURALITE D'ARTICLES

(30) Priorität: 17.10.2014 DE 102014015368
(43) Veröffentlichungstag der Anmeldung: 20.04.2016
(73) Patentinhaber: THEEGARTEN-PACTEC GMBH & CO. KG, 01237 Dresden (DE)
(72) Erfinder: Berger, Stefan, 01157 Dresden (DE); John, Steffen, 01217 Dresden (DE)
(74) Vertreter: Grünecker Patent- und Rechtsanwälte PartG mbB

(56) Entgegenhaltungen:
- CA-A- 1 120 329
- DE-A1-102004 008 305
- GB-A- 2 255 760
- US-A- 2 247 694
- US-A- 5 161 665
- US-A1- 2004 050 663

## Beschreibung

Die Erfindung betrifft ein Gruppierungsverfahren und eine Gruppierungsvorrichtung zum Erzeugen und Zusammenführen von Gruppen von Artikeln aus einer Mehrzahl von Artikeln, wobei die Artikel mehrspurig zugeführt werden und einspurig gruppenweise abgeführt werden, wobei jede Gruppe eine vorbestimmte Anzahl von Artikeln aus der Mehrzahl von Artikeln aufweist und jede Gruppe mit einem Zwischenraum mit vorbestimmtem Abstand zueinander beabstandet ist.

Die Erfindung bezieht sich insbesondere auf ein Gruppierungsverfahren zum Erzeugen und Zusammenführen von Gruppen und eine Gruppierungsvorrichtung zum Erzeugen und Zusammenführen von Gruppen, die zur Verwendung in Verpackungs-Vorrichtungen zum automatischen Verpacken von Artikeln, wie Nahrungsmitteln, vorgesehen sind, und zwar insbesondere kleinstückige Artikel, wie Hart- oder Weichkaramellen bzw. Schokolade, Wickelkaramellen, Gießblechstücke, Pralinen oder dergleichen, aber auch zum Verpacken von Mehrfachverpackungen, die auch als Multipacks bezeichnet werden. Bei derartigen Verpackungs-Vorrichtungen zum Verpacken von Artikeln in Flow-Packs oder Multipacks werden die einzelnen Artikel, die zu verpacken sind, zu Gruppen zusammengestellt, so dass sie als größeres Gebinde verpackt werden können, beispielsweise mittels Flowpack-Folien.

DE 197 285 86 B2 betrifft eine Einrichtung zum Zusammenführen von Artikeln zu Gruppen.

Diese Einrichtung weist ein Fördermittel 7 in Form eines Kettenförderers auf, der vorstehende Mitnehmermittel 9 (auch als Näschen bezeichnet) aufweist, die an einem Eingang der Vereinzelungsvorrichtung bereitgestellt und angesammelte Artikel übernehmen und vereinzelt zum Ausgang der Vereinzelungsvorrichtung fördern. Die Mitnehmermittel 9 sind beabstandet zueinander angeordnet und bilden Zwischenräume aus, in die die Artikel zum Vereinzeln aufgenommen werden. Nach dem Ausgang ist ein Gabelelement 11 angeordnet, das eine Beschleunigungsbewegung an den vereinzelten Artikeln ausführt, um die vereinzelten Artikel gruppenweise anzuordnen. Hierfür taucht das Gabelelement 11 in den Bereich der Mitnehmer ein und beschleunigt den jeweilig ergriffenen Artikel aus dem Ausgang heraus hin zu einem bereits aus dem Ausgangsbereich beförderten Artikel, so dass der beschleunigte Artikel gegen einen zuvor heraus beförderten Artikel gestoßen wird. Dies wird solange wiederholt, bis die erforderliche Anzahl an Artikeln zur Gruppenbildung erzielt worden ist, ohne dass hierfür eine Start-Stopp-Bewegung des Kettenförderers notwendig ist. Nach der Gruppierung findet unmittelbar ein Verpacken der Artikel statt.

Nachteilig hierbei ist, dass es durch den Beschleunigungsvorgang mittels des Gabelelements 11 zu einer Beschädigung des Artikels entweder durch das Ergreifen mittels des Gabelelements und/oder durch das Anstoßen gegen einen zuvor heraus beförderten Artikel kommen kann. Außerdem kann es zu einer Verpackung von beschädigten Artikeln kommen, da die Umverpackung unmittelbar nach der Gruppierung der Artikel erfolgt.

Ein weiteres Beispiel einer Vorrichtung zum Transportieren und Gruppieren von Gegenständen ist in der DE 10 2004 008305 A1 offenbart.

Aus dem Dokument CA1120329 A ist ein Gruppierungsverfahren nach dem Oberbegriff des Anspruchs 1 bekannt.

Aufgabe der Erfindung ist es daher, eine Gruppierungsvorrichtung und ein Gruppierungsverfahren bereitzustellen, mit dem eine Gruppierung von Artikeln durchgeführt werden kann, ohne dass die Artikel hierbei beschädigt werden und ohne dass hierbei eine Unterbrechung des Förderbetriebs notwendig ist.

Die Aufgabe wird hinsichtlich des Gruppierungsverfahrens erfindungsgemäß mit einem Gruppierungsverfahren mit den Merkmalen nach Anspruch 1 gelöst.

Nach einem erfindungsgemäßen Gruppierungsverfahren zum Erzeugen und Zusammenführen von Gruppen von Artikeln aus einer Mehrzahl von Artikeln, insbesondere kleinstückigen Artikeln, wie Hart- oder Weichkaramellen bzw. Schokoladenstücken, Pralinen oder dergleichen, werden die Artikel mehrspurig zugeführt und mehrspurig vereinzelt oder gruppiert und dann mehrspurig in quer zur Transportrichtung alternierend angeordneten Bewegungs-Gruppen gruppiert, wobei die alternierend angeordneten Bewegungs-Gruppen in hintereinander in Transportrichtung mit einem Abstand versehene Verpackungs-Gruppen einspurig zusammenführt werden, wobei jede Verpackungs-Gruppe eine vorbestimmte Anzahl von Artikeln aufweist und mit einem Zwischenraum mit vorbestimmtem Abstand zur nachfolgenden Verpackungs-Gruppe bereitgestellt wird, wobei aus einer Mehrzahl von Artikeln jeweils mittels einer Vereinzelungsvorrichtung eine vorbestimmte Anzahl von Artikeln vereinzelt und alterniert an einem Eingang einer Beförderungsvorrichtung bereitgestellt werden, so dass die Mitnehmer-Nasen eines Mitnehmerbandes zwischen jeden vereinzelten Artikel oder nach einem vorbestimmten Intervall von Artikeln in den Zwischenraum mehrerer Artikel greifen können, wobei eine Transportgeschwindigkeit der Mitnehmer-Nasen beziehungsweise des Mitnehmerbandes größer ist als eine Transportgeschwindigkeit, mit der die vereinzelten Artikel zugeführt werden, so dass die vereinzelten Artikel seitlich nebeneinander quer zur Transportrichtung und beabstandet hintereinander in Transportrichtung zu dem Ausgang der Beförderungsvorrichtung mehrspurig und gruppenweise mit einer größeren Geschwindigkeit transportiert werden als die Geschwindigkeit, mit der die vereinzelten Artikel zugeführt werden, und die vereinzelten und zueinander beabstandeten Artikel zu einer Bewegungs-Gruppe mit einer vorbestimmten Anzahl n zusammengefasst werden und die Artikel der Bewegungs-Gruppe gegeneinander angrenzen, indem die vereinzelten Artikel mit einer erhöhten Geschwindigkeit in Transportrichtung hintereinander zusammengeschoben werden.

Bei den Artikeln kann es sich sowohl um unverpackte, als auch um verpackte Einzel-Artikel handeln. Hierbei werden die bereits verpackten Artikel als Einzel-Artikel angesehen, selbst wenn innerhalb der Verpackung mehrere Artikel zusammengefasst sind.

Für die zugeführten Artikel kommen ebenfalls Non-Food-Produkte in Frage. Es handelt sich stets um kleinstückige, vorgeformte Produkte.

Die Zuführung ermöglicht auch die Verarbeitung von Einzel-Artikel, wobei in diesem Fall das Verfahren auf eine reine Spurzusammenführung beschränkt wird. Die Gruppenbildung aus einer Mehrzahl von Artikeln je Gruppe ist nicht zwingend notwendig.

Nach einer Ausführungsform des Gruppierungsverfahrens werden die seitlich quer zur Transportrichtung mehrspurig und hintereinander angeordneten und gruppierten Artikel zum Ausgang der Beförderungsvorrichtung hin zu Verpackungs-Gruppen zusammengeführt, die in Transportrichtung hintereinander und zueinander beabstandet sind.

Die Aufgabe wird hinsichtlich der Gruppierungsvorrichtung erfindungsgemäß mit einer Gruppierungsvorrichtung mit den Merkmalen nach Anspruch 3 gelöst.

Nach der Gruppierungsvorrichtung von Anspruch 3 zum Erzeugen und Zusammenführen von Gruppen von Artikeln, insbesondere kleinstückigen Artikeln, wie Hart- oder Weichkaramellen, bzw. Schokoladenstücke, Pralinen oder dergleichen, aus einer Mehrzahl von Artikeln, die Gruppierungsvorrichtung umfassend eine Beförderungsvorrichtung, mehrspurig nebeneinander angeordnete Förder- und / oder Nebenführungsbahnen, eine Hauptführungsbahn und Übergangsführungsbahnen, werden die Artikel an einem Eingang der Gruppierungsvorrichtung mehrspurig in den nebeneinander angeordnete Förder- und/ oder Nebenführungsbahnen zugeführt, wobei die Nebenführungsbahnen sich in der Hauptführungsbahn vereinen, so dass an dem Ausgang der Gruppierungsvorrichtung die Mehrzahl von Artikeln einspurig hintereinander in Transportrichtung beabstandete Verpackungs-Gruppen zusammenführt werden, wobei die Beförderungsvorrichtung die am Eingang bereitgestellten Artikel zunächst mehrspurig und quer zur Transportrichtung alternierend angeordneten Gruppen in den Nebenführungsbahnen durch Beschleunigen in Bewegungs-Gruppen mehrspurig anordnet und vor dem Ausgang unter Zusammenwirkung mit den Übergangs-Führungsbahnen und der Hauptführungsbahn in hintereinander einspurig angeordnete Verpackungs-Gruppen zusammenführt, wobei jede Verpackungs-Gruppen eine vorbestimmte Anzahl von Artikeln und einen Zwischenraum mit vorbestimmten Abstand zur nachfolgenden Verpackungs-Gruppe aufweist, wobei die Beförderungsvorrichtung ein umlaufendes Mitnehmer-Band aufweist, das sich in Transportrichtung benachbart vom Eingang bis benachbart zum Ausgang erstreckt und an dem eine Mehrzahl von Mitnehmer-Nasen angeordnet ist, die sich quer zur Transportrichtung und alternierend aus dem Mitnehmer-Band erstrecken, so dass die Mitnehmer-Nasen jeweils alternierend eine erste und zweite Förderbahn und die jeweilige Nebenführungsbahn überstreichen, und alle Mitnehmer-Nasen die Hauptführungsbahn überstreichen, um auf der jeweiligen Nebenführungsbahn und auf der Hauptführungsbahn vorhandene Artikel mitzuführen und / oder zu beschleunigen und um einen möglichen Abstand zwischen den in den Gruppen befindlichen Artikeln im Bereich der Förderbahn sowie auf den Neben-Führungsbahnen aufzuheben.

Nach einer Ausführungsform der Gruppierungsvorrichtung weist die Beförderungsvorrichtung wenigsten eine erste Förder- und / oder Nebenführungsbahn und eine zweite Förder- und / oder Nebenführungsbahn auf, die stromaufwärts zur Transportrichtung zu dem Eingang hin im Wesentlichen mehrspurig und parallel zueinander verlaufen und sich in Transportrichtung in einer gemeinsamen Hauptführungsbahn einspurig vereinigen.

Nach einer Ausführungsform der Gruppierungsvorrichtung ist angrenzend zum Eingang der Gruppierungsvorrichtung eine Vereinzelungsvorrichtung angeordnet, die die Mehrzahl von Artikeln der ersten und der zweiten Nebenführungsbahn vereinzelt und zeitlich versetzt der Gruppierungsvorrichtung zuführt.

Die Erfindung betrifft auch eine Verpackungsvorrichtung zum Verpacken von gruppierten Artikeln aus hintereinander beabstandeten Verpackungs-Gruppen, wobei die Verpackungsvorrichtung eine Gruppierungsvorrichtung nach wenigstens einem der Ansprüche 3 bis 5 zum Erzeugen und Zusammenführen von Gruppen von Artikeln aus einer Mehrzahl von Artikeln aufweist.

Vorteilhafte Ausführungsformen der Gruppierungsvorrichtung bzw. des Gruppierungsverfahrens ergeben sich aus den jeweiligen Unteransprüchen.

Nachfolgend wird die vorliegende Erfindung anhand eines Ausführungsbeispiels in Verbindung mit den zugehörigen Zeichnungen näher erläutert. In diesen zeigen:
- Fig. 1: eine schematische Draufsicht auf eine Ausführungsform der erfindungsgemäßen Gruppierungsvorrichtung zum Gruppieren und Zusammenführen von Artikeln,
- Fig. 1A: ein schematisches Verfahrensdiagramm von Verfahrensschritten eines erfindungsgemäßen Gruppierungsverfahrens für die Verwendung in der in Fig. 1 gezeigten Gruppierungsvorrichtung,
- Fig. 2: eine schematische, perspektivische Ansicht der in Fig. 1 dargestellten Gruppierungsvorrichtung,
- Fig. 3: eine schematische, perspektivische Ansicht der Gruppierungsvorrichtung, wobei ein Endlos-Mitnehmerband einer Beförderungsvorrichtung der Gruppierungsvorrichtung von Fig. 2 in einer beabstandeten Position von den Nebenführungsbahnen und der Hauptführungsbahn der Beförderungsvorrichtung gezeigt ist,
- Fig. 4: eine schematische, perspektivische Detailansicht vom Eingang hin zum Ausgang der in Fig. 3 dargestellten Gruppierungsvorrichtungen nach der Ansichtsführung B1-B2,
- Fig. 5: eine schematische, perspektivische Detailansicht des Eingangs der in Fig. 2 dargestellte Gruppierungsvorrichtungen,
- Fig. 6: eine schematische, perspektivische Detailansicht des Ausgangs der in Fig. 2 dargestellte Gruppierungsvorrichtungen,
- Fign. 7 und 8: jeweils eine schematische, perspektivische Detailansicht des Ausgangs der Gruppierungsvorrichtung von Fig. 2 mit unterschiedlichen Zustandspositionen einer Mitnehmer-Nase an einer Beförderungsvorrichtung der Gruppierungsvorrichtung, und
- Fig. 9: eine schematische Draufsicht auf eine Ausführungsform der erfindungsgemäßen Gruppierungsvorrichtung zum Gruppieren und zum Zusammenführen von Artikeln, wobei eine andere Gruppierungsart dargestellt ist.

Zur besseren Orientierung ist in den jeweiligen Figuren ein Bezugssystem mit X-Y-Z-Richtung angegeben, wobei die X-Richtung die Vorrichtungs-Längsrichtung, die Y-Richtung die Vorrichtungsbreiten-Richtung und die Z-Richtung die Vorrichtungshöhen-Richtung jeweils angibt.

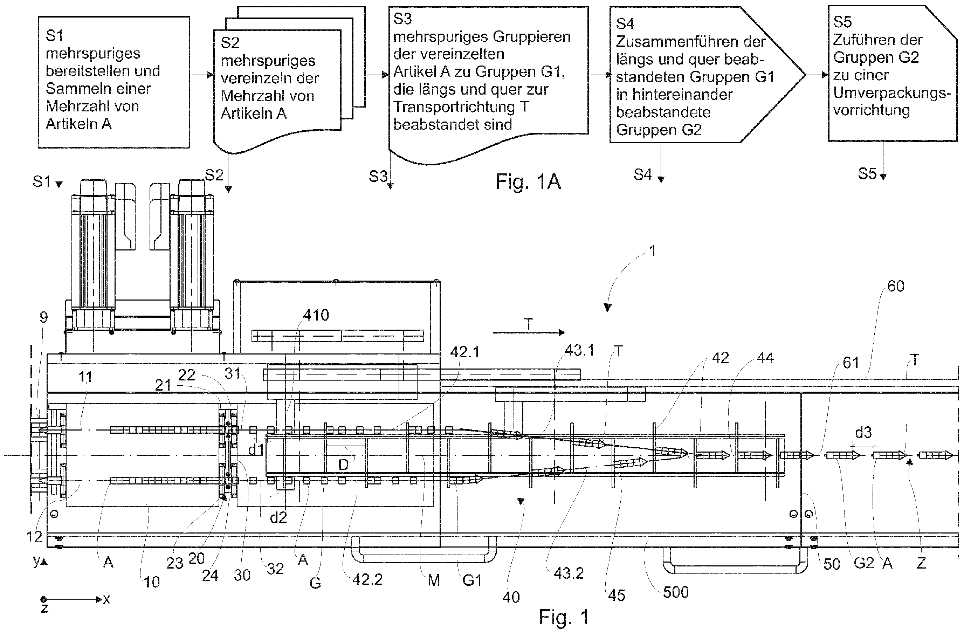

In Fig. 1 ist in einer schematischen Draufsicht eine Ausführungsform einer Gruppierungsvorrichtung 1 zum Erzeugen und Zusammenführen aus von quer zur Transportrichtung T nebeneinander versetzten Bewegungs-Gruppen G1 von Artikeln A aus einer Mehrzahl von vereinzelten Artikeln A in hintereinander beabstandet angeordnete Verpackungs-Gruppen G2 dargestellt.

Mit der in der Fig. 1 gezeigten Gruppierungsvorrichtung 1 zum Erzeugen und Zusammenführen aus von versetzt nebeneinander angeordneten Bewegungs-Gruppen G1 von Artikeln A aus einer Mehrzahl von vereinzelten Artikeln A in hintereinander zueinander beabstandeten Verpackungs-Gruppen G2 ist es möglich, einzelne Artikel A, die zu verpacken oder bereits verpackt sind, zu hintereinander angeordneten und beanstandeten Verpackungs-Gruppen G2 zusammenzuführen, so dass damit ein größeres Gebinde, beispielsweise aus einer Flow-Verpackung, aus den hintereinander zueinander beabstandeten Verpackungs-Gruppen G2 ausgebildet werden kann.

Bei den Artikeln A kann es sich um Lebensmittel, wie Hartschokolade, Wickelkaramellen, Gießblechstücke, Pralinen oder dergleichen, aber auch um Nahrungsmittel und Artikel A, die bereits in einer Vorverpackung angeordnet sind, handeln. Außerdem kann es sich bei den Artikeln A sowohl um unverpackte, als auch um verpackte Artikel A handeln. Hierbei werden die bereits verpackten Artikel A als Einzel-Artikel A angesehen, selbst wenn innerhalb der Verpackung mehrere Artikel zusammengefasst sind.

Als zugeführte Artikel A kommen auch Non-Food-Artikel in Frage. Es handelt sich hierbei stets um kleinstückige, vorgeformte Artikel A.

Nach dem erfindungsgemäßen Gruppierungsverfahren, wie schematisch in Fig. 1A dargestellt, werden die im Verfahrensschritt S1 mehrspurig gesammelten Artikel A zunächst im Verfahrensschritt S2 unter Auswahl einer vorbestimmten Anzahl n von Artikeln A zueinander beabstandet und vereinzelt, so dass diese eine Gruppe G aus vereinzelten, zueinander beabstandeten Artikeln A bilden, und dann im Verfahrensschritt S3 zu seitlich nebeneiander versetzt angeordneten Bewegungs-Gruppen G1 zusammengestellt, wobei eine vorbestimmte Anzahl n von Artikeln A zu der Gruppe G1 zusammengefasst werden, in dem die beabstandeten und vereinzelten Artikel A gegeneinander gebracht werden, so dass zwischen den Artikeln A der Gruppe G1 kein Abstand vorhanden ist.

Im Verfahrensschritt S3 werden die mehrspurig bereitgestellten Artikel A mittels einer Beförderungsvorrichtung 40 mehrspurig und alternierend zu Bewegungs-Gruppen G1 zusammengefasst, wobei die jeweiligen Bewegungs-Gruppen G1 aus einer vorbestimmten Anzahl von einander angrenzenden Artikeln A in Transportrichtung T und quer zur Transportrichtung T der Gruppierungsvorrichtung 1 befördert werden.

Im Verfahrensschritt S4 erfolgt ein Zusammenführen der mehrspurig nebeneinander versetzt angeordneten Bewegungs-Gruppen G1 in einspurig hintereinander beabstandete Verpackungs-Gruppen G2, so dass die zuvor quer und in Transportrichtung T mehrspurig versetzt beabstandeten Bewegungs-Gruppen G1 mit einem vorbestimmten Abstand d2 einspurig hintereinander angeordnet sind. Die Bewegungs-Gruppe G1 wird durch Zusammenführen der beabstandeten Artikel A der Gruppe G ausgebildet.

Im Verfahrensschritt S5 werden die einspurig angeordneten Verpackungs-Gruppen G2 zum Verpacken der jeweiligen Verpackungs-Gruppe G2 einer Verpackungsvorrichtung (nicht dargestellt) zugeführt.

In der Verpackungsvorrichtung werden die einspurig hintereinander angeordneten Verpackungs-Gruppen G2 dann nachfolgend in einer Flow-Pack oder Mehrfach-Verpackung zusammengefasst, d.h. die jeweiligen Verpackungs-Gruppen G2 werden mit einem Verpackungsmaterial zu einem Gebinde zusammengefasst und teilweise oder vollständig mit einem Verpackungsmaterial umhüllt.

Um die Flow-Pack oder Mehrfach-Verpackung herstellen zu können, wird hierbei aus einem kontinuierlichen mehrspurigen Strom von Artikeln A eine Zusammenfassung der Artikel A zu einspurig beabstandeten Verpackungs-Gruppen G2 aus einer vorbestimmten Anzahl n von Artikeln A durchgeführt, so dass die jeweilige Gruppe G2 in einen durchgängigen schlauchförmigen Umhüller der Umverpackungsvorrichtung 1 gebracht werden kann. Der Umhüller kann eine Flowpack-Folie sein, die schlauchförmig um die jeweiligen Verpackungs-Gruppen G2 gelegt wird und wenigstens an den beiden Enden und üblicherweise an einer Rückseite zugeschnitten und verschweißt wird.

Die vorbestimmten Abstände d3 bzw. Zwischenräume d3 (siehe Figur 1) zwischen den Verpackungs-Gruppen G2 sind notwendig, um jeweils eine Einschlusszone am Umhüller ausbilden zu können, an der üblicherweise ein Schneidelement der Umverpackungsvorrichtung die die einspurig hintereinander und mit einem vorbestimmten Abstand d3 bereitgestellten Verpackungs-Gruppen G2 umgebende Schlauchhülle gemäß der Gruppierung der Verpackungs-Gruppe G2 verschweißen und trennen kann.

Die Pfeile S1 bis S5 des Verfahrensdiagramms aus Figur 1A sind auf die jeweiligen Abschnitte der Gruppierungsvorrichtung 1 von Fig. 1 gerichtet, wo der jeweilige Verfahrensschritt durchgeführt werden soll.

Die in Fig. 1 gezeigte Gruppierungsvorrichtung 1 weist an ihrem Eingang 30 eine Vereinzelungsvorrichtung 20 auf, an der stromaufwärts zur Transportvorrichtung T eine Zuführvorrichtung 10 angrenzt, über die die zu gruppierenden Artikel A über eine erste und eine zweite Zuführbahn 11 und 12 mehrspurig und gegeneinander angrenzend in einem kontinuierlichen Strom an die Vereinzelungsvorrichtung 20 übergeben werden.

Die Zuführbahnen 11 und 12 sind vorzugsweise in einer Ebene und im Wesentlichen parallel zueinander angeordnet. Die Zuführvorrichtung 10 weist auf der dem Eingang 30 abgewandten Seite einen Kupplungsabschnitt 9 auf, mittels dem die Zuführvorrichtung 10 an eine die Artikel A bereitstellende oder herstellende Vorrichtungen anschließbar ist. Ferner werden die Artikel A kontinuierlich und mindestens zweibahnig zugeführt und in einem Stau in der Zuführvorrichtung 10 bereitgestellt. Die Zuführvorrichtung 10 kann auch eine größere Anzahl von Bahnen 11, 12 zum Zuführen der Artikel aufweisen.

Am Ausgang 50 der Gruppierungsvorrichtung 1 grenzt eine Überführungsvorrichtung 60 an, die die einspurig, beabstandeten und hintereinander in Verpackungs-Gruppen G2 gruppierten Artikel A zu einer Vorrichtung zur Weiterverarbeitung, beispielsweise einer Flow-Pack-Verpackungsvorrichtung überführt.

Die Überführungsvorrichtung 60 weist gegebenenfalls auch einen Kupplungsabschnitt zum Kuppeln an die Verpackungsvorrichtung auf. Auf der Überführungsvorrichtung 60 kann außerdem eine Kontrolle der einspurig zusammengeführten Verpackungs-Gruppen G2 bzw. der in der Verpackungs-Gruppe G2 konzentrierten Artikel A durchgeführt werden, wobei beschädigte Artikel A oder Verpackungs-Gruppen G2 vor dem Verpacken aussortiert werden. Dies kann manuell durch Personal oder maschinell mittels Sensoren erfolgen.

In einer anderen, nicht dargestellten Ausführungsform der Gruppierungsvorrichtung 1 ist am Ausgang 50 eine Verpackungsvorrichtung direkt angeschlossen.

Am Eingang 30 der Gruppierungsvorrichtung 1 ist die Vereinzelungsvorrichtung 20 vorgesehen, die die aneinander angrenzenden Artikel A aus der Zuführvorrichtung 10 übernimmt und an dem Eingang 30 der Gruppierungsvorrichtung 1 vereinzelt, synchronisiert und beabstandet zuführt. Synchronisiert bedeutet hierbei, dass die Vereinzelungsvorrichtung 20 die Zustellung der Artikel A auf die Transportbewegung einer Beförderungsvorrichtung 40 der Gruppierungsvorrichtung 1 anpasst und zeitlich abstimmt.

Die Vereinzelung der Artikel A wird mittels einer Vereinzelungsvorrichtung 20 unter zu Anwendung eines Geschwindigkeitssprunges der Fördergeschwindigkeit der Artikel A realisiert.

Die Vereinzelungsvorrichtung 20 weist hierfür die jeweilige Zuführbahnen 11, 12 und Sensoren 21, 22, 23, 24 auf. Die Förderbahnen bewegen sich schneller als der ankommende Produktstrom von Artikeln A, so dass zwischen den Artikeln Lücken d1 ausbildbar sind. Zum Regeln des Abstandes d1 der Artikel werden Lichtschranken, bzw. elektrische Sensoren 21, 22, 23, 24 eingesetzt, welche die Lage und Position der Artikel A erfassen und auf den servogesteuerten Bewegungsverlauf beider Zuführbahnen 11, 12 Einfluss nehmen.

Die Sensoren 21, 23 erfassen jeweils die Vorderkante des sich auf den Zuführbahnen 11, 12 ausgebildeten Produktstaus bzw. die vorauslaufende Artikelvorderkante
Die Sensor 22, 24 erfassen die vorauslaufende Produktvorderkante des vereinzelten Einzelproduktes und kontrolliert somit dessen Lage zur Regelung der Vereinzelung, bzw. zur Regelung der Zuführbandbewegung der Zuführbahnen 11, 12.
Somit wird eine lage- und taktgenaue Vereinzelung der Einzel-Artikel realisiert.
Bei den Sensoren 21, 22, 23, 24 handelt es sich bevorzugt um Gabellichtschranken. Hierbei sind je Zuführbahn 11, 12 bzw. je Spur zwei Gabellichtschranken 21, 22; 23, 24 hintereinander geschaltet.

Wie auf der schamtischen Draufsicht von Figur 1 gezeigt, werden die in der ersten und der zweiten Führungsbahn 11, 12 gestaut gesammelten Artikel A mittels der Vereinzelungsvorrichtung 20 mit jeweils einem vorbestimmten Abstand d1 für eine Gruppe G1 aus untereinander beabstandet Artikeln über die Vereinzelungsvorrichtung 20 der Beförderungsvorrichtung 40 zugeführt.

Die Vereinzelungsvorrichtung 20 am Eingang der Gruppierungsvorrichtung 1 beabstandet die an der Zuführvorrichtung zusammengeschobenen Artikel A in vereinzelte Artikel A mit einem vorbestimmten Abstand d1, d2, wobei definierte Lücken d1 zwischen den einzelnen Artikeln A und definierte Zwischenabstände d2 zwischen den gruppenbildenden Artikeln A ausgebildet werden, die eine Gruppe G mit beabstandeten Artikeln A und einer vorbestimmten Anzahl n von Artikeln A bilden. Im gezeigten Ausführungsbeispiel in Figur 1 ist die vorbestimmte Anzahl n = 4. Die Anzahl der jeweils gruppenbilden Artikel A für die Gruppe G kann n≥ 1 sein, wobei n eine natürliche Zahl ist.

Es sind unterschiedliche Ausführungsformen der Vereinzelung realisierbar.

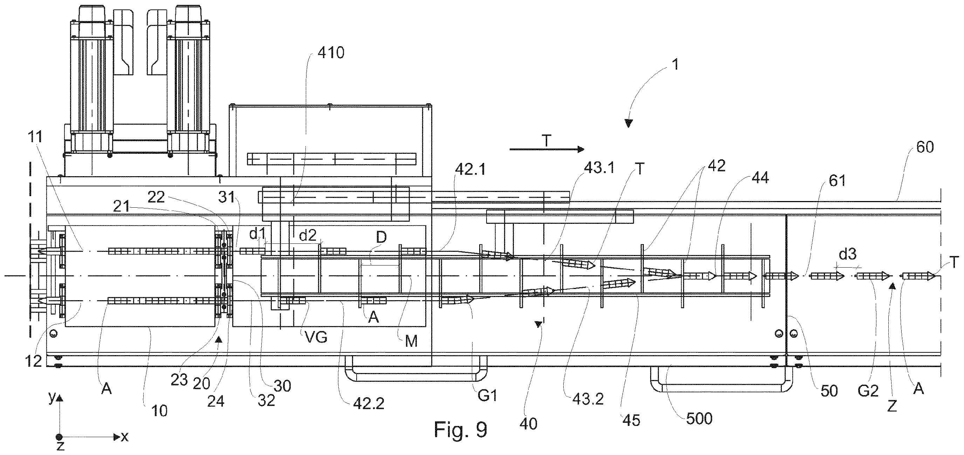

In der in Figur 9 dargestellten Ausführungsform ist der Abstand d1 zwischen den Artikeln A im Wesentlichen = 0

Die Regelung der Zuführbänder 11, 12 ist hierbei derart ausgelegt, dass komplette Produktgruppen G ohne einen Abstand d1 zwischen den Artikeln A vereinzelt werden. Diese Variante ist besonders produktschonend, da hierbei kein Aufeinanderprallen der Einzelprodukte beim Zusammenschieben entsteht.

Nach einer andern Ausführungsform ist der Abstand d1 zwischen den Artikeln im Wesentlichen gleich dem Abstand d2 zwischen den Gruppen. Die Vereinzelung der Artikel ist hierbei derart ausgelegt, dass die Einzel-Artikel A stets im Wesentlichen mit dem gleichen Abstand d1=d2 zwischen den Produkten A sowie den Bewegungs-Gruppen G vereinzelt werden.

Nach einer anderen Ausführungsform erfolgt die Regelung der Zuführbänder 11, 12 derart, dass der Abstand d1 zwischen den Artikeln A kleiner ist, als der Abstand d2 zwischen den Produktgruppen G (d1<d2). Mit dieser Ausführungsform wird eine Vorgruppierung realisiert.

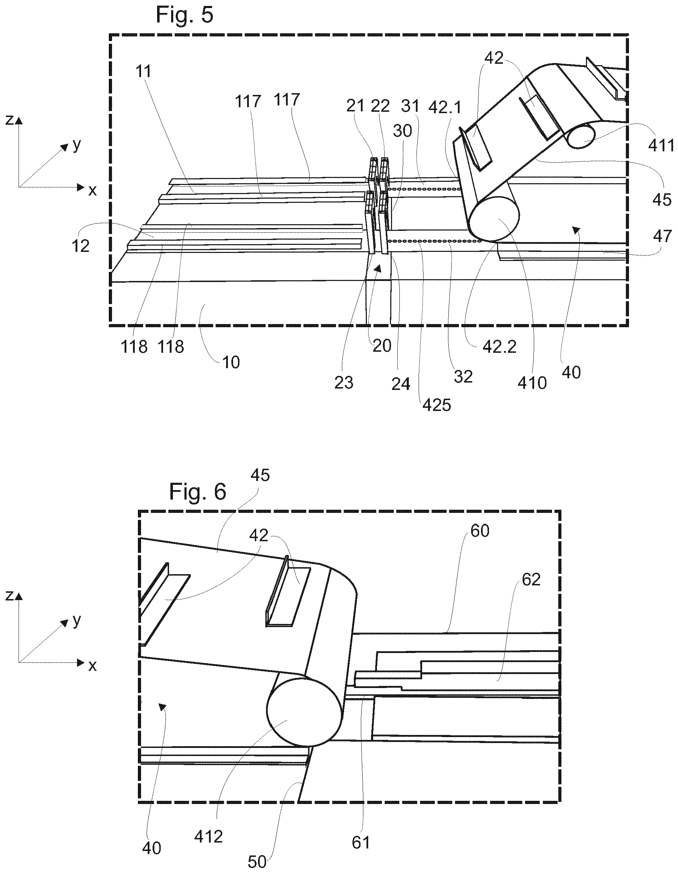

Mit Hilfe der Vereinzelungsvorrichtung 20 findet mittels der servogetriebenen Förderbahnen 11, 12, der vakuumunterstützten separaten Förderbahnen 31, 32 (siehe Beförderungsvorrichtung 40, und Fig. 5) sowie den Sensoren 21, 22, 23, 24 eine Vereinzelung und eine synchronisierte Zufuhr der Artikel A je Spur individuell geregelt und überwacht statt, sodass definierte Lücken d1 zwischen den Artikeln A und definierte Zwischenräume d2 zwischen den Gruppen G von Artikeln A erzeugt werden, welche an ein sich kontinuierlich bewegendes Mitnehmerband 45 und die zugehörigen Führungsbahnen 42.1, 42.2, 43.1, 43.2, 44 der Beförderungsvorrichtung 40 übergeben werden.

Die Förderbahnen 31, 32 sind separate Bänder, wobei die Führungsbahnen 42.1, 42.2 zur Artikelführung ohne separat angetriebenes Band zum Artikeltransport ausgebildet sind. Der Transport erfolgt hierbei mittels der Mitnehmer-Nasen 42 des Mitnehmerbandes 45. Die Führungsbahnen 42.1 und 42.2 beginnen erst unterhalb des Mitnehmerbandes. Zuvor befinden sich die an der Vereinzelungsvorrichtung 20 beginnenden Förderbänder 31, 32, welche bis unter das Mitnehmerband 45 reichen und bereits von den Mitnehmer-Nasen überstrichen werden.

In dem in Figur 1 gezeigten Ausführungsbeispiel enden die Förderbahnen 31, 32 vor Beginn der Führungsbahn 42.1 und 42.2. Die Artikel A werden auf den Führungsbahnen 42.1, 42.2, 43.1, 43.2, 44 von den Mitnehmer-Nasen 42 des Mitnehmerbandes 45 schiebend in Transportrichtung T bewegt. Die Führungsbahnen 42.1, 42.2, 43.1, 43.2, 44 sind nicht bewegte Elemente.

Nach einer anderen Ausführungsform der Beförderungsvorrichtung 40 sind die Führungsbahnen 42.1, 42.2, 43.1, 43.2 bis zur Hauptführungsbahn 44 als Transportbänder ausgebildet. Mit den Transportbändern kann eine noch produktschonendere Bildung der Bewegungs-Gruppen G1 und der Verpackungs-Gruppen G2 realisiert werden, da die Differenz der Auftreffgeschwindigkeiten zwischen den Einzel-Artikel reduziert werden kann.

In einer weiteren denkbarere Ausführungsform der Beförderungsvorrichtung 40 sind mehrerer separater Transportbänder mit unterschiedlichen Bandgeschwindigkeiten im Bereich der Führungsbahnen 42.1, 42.2, 43.1, 43.2 vorgesehen, um einen optimalen Artikelvorschub während der Spurvereinigung zur realisieren.

Die Bandgeschwindigkeiten der Transportbänder sind hierbei derart abgestimmt, dass die Abstände d1 zwischen den Einzel-Artikeln A am Ausgang 50 der Beförderungsvorrichtung 40 geschlossen sind.

Die Beförderungsvorrichtung 40 ist derart ausgebildet, dass die mehrspurig zugeführten und beabstandeten Artikel A in beabstandete Verpackungs-Gruppe G2, die einspurig hintereinander angeordnet sind, zusammengeführt werden.

Die Beförderungsvorrichtung 40 weist das Mitnehmerband 45 und die Führungsbahnen 42.1, 42.2, 43.1, 43.2, 44 auf, wobei unter Zusammenwirkung des Mitnehmerbandes 45 und der Führungsbahnen die Artikel A von einer mehrspurigen Gruppierung G, G1 in eine Mehrzahl von einspurig hintereinander beabstandete Verpackungs-Gruppen G2 angeordnet werden.

Die Vereinzelung mittels der Vereinzelungsvorrichtung 20 und insbesondere der von der Vereinzelungsvorrichtung 20 erzeugte Abstand d2 ist mit der Bewegung von dem Mitnehmerband 45 vorstehenden Mitnehmer-Nasen 42 so abzustimmen, dass die jeweilige Mitnehmer-Nase 42 zwischen eine vorbestimmte Anzahl n von Artikeln A abwechselnd und versetzt je nach Förderbahn 31, 32 eintauchen kann und so die vorbestimmte Anzahl n von Artikeln A für eine Bewegungs-Gruppe G1 gegeneinander drängt, so dass die Bewegungs-Gruppe G1 aus aneinander angrenzenden Artikeln mit einer vorbestimmten Anzahl von Artikeln A ausgebildet wird. Hierfür ist die Transportgeschwindigkeit v1 der Mitnehmer-Nasen 42 bzw. des Mitnehmerbandes 45 größer als die Transportgeschwindigkeit v2 der Artikel A auf den Förderbahnen 31, 32, die die Gruppe G ausbilden.

Außerdem sind am Eingang 30 der Gruppierungsvorrichtung 1 korrespondierend zum Zustellbereich der Zuführvorrichtung 10 und deren ersten und zweiten Zuführbahnen 11 und 12 zugehörige Förderbahnen 31 und 32 vorgesehen, die die vereinzelten Artikel A zu einem Mitnehmerband 45 einer Beförderungsvorrichtung 40 führen.

Das Endlos-Mitnehmerband 45 weist an seiner Außenfläche Mitnehmer-Nasen 42 auf, die sich quer zur Transportrichtung T des Mitnehmerbandes 45 erstrecken und alternierend seitlich versetzt zur Mittellinie M des Endlos-Mitnehmerband 45 bzw. der Mittellinie M der ersten und der zweiten Förderbahn 31, 32 angeordnet sind, so dass abwechselnd die jeweilige erste und zweite Förderbahn 31, 32 überstrichen werden.

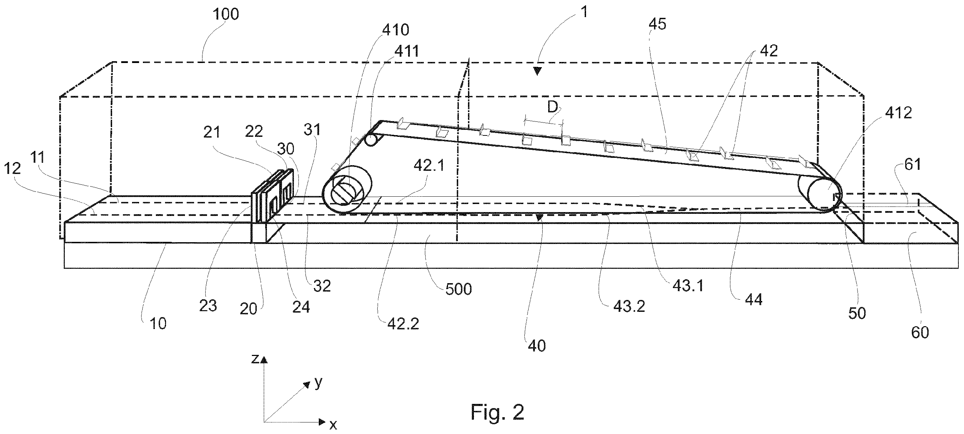

Das Endlos-Mitnehmerband 45 wird von einer Antriebswalzen 410 angetrieben und von Umlenkrollen 411, 412 oberhalb der ersten und zweiten Förderbahnen 31 und 32 sowie den zugehörigen Führungsbahnen 42.1, 42.2, 43.1, 43.2, 44 geführt, wie beispielsweise in Fig.2 dargestellt.

Die Mitnehmer-Nasen 42 sind in Transportrichtung T mit einem vorbestimmten und vorzugsweise konstanten Abstand D zueinander und alternierend quer zur Transportrichtung T seitlich versetzt auf der Seite des Mitnehmerbandes 45 angebracht, die den Förderbahnen 31, 32 und den Führungsbahnen 42.1, 42.2, 43.1, 43.2, 44 der Beförderungsvorrichtung 40 im Transportbetrieb zugewandt sind.

Die beabstandeten Mitnehmer-Nasen 42 tauchen nach einem definierten Abstand D und einer definierten Anzahl n von Artikeln A in den Zwischenräume mit dem Abstand d2 zwischen den Gruppen G von Artikeln A ein. Die Aufnahme der Artikel A durch das Mitnehmerband 45 geschieht zwischen den jeweiligen Förderbahnen 31, 32 jeweils mit einem halben Takt versetzt auch bedingt durch die zeitlich versetzte Zuführung der Artikel aus der Vereinzelungsvorrichtung 20, wobei zum Ausbilden der hintereinander angeordneten Verpackungs-Gruppe G2 am Ausgang der Gruppierungsvorrichtung 1 die Mitnehmer-Nasen 45 und die Führungsbahnen 42.1, 42.2, 43.1, 43.2, 44 der Beförderungsvorrichtung 40 zusammenwirken.

Die Führungsbahnen 42.1, 42.2, 43.1, 43.2, 44 der Beförderungsvorrichtung 40 können in parallel zueinander angeordneten Neben-Führungsbahnen 42.1, 42.2, sich annähernde Übergangs-Führungsbahnen 43.1, 43.2, die sich in einer Haupt-Führungsbahn 44 vereinen, unterteilt werden.

Die vereinzelten Artikel A auf den Neben-Führungsbahnen 42.1, 42.2 werden mit den Mitnehmer-Nasen 42 gruppenweise weg von der ersten und zweiten Förderbahn 31, 32 und auf die Führungsbahnen 42.1, 42.2, 43.1, 43.2, 44 der Beförderungsvorrichtung 40 geführt und aufgrund der größeren Bewegungsgeschwindigkeit der Mitnehmer-Nasen 42 gegeneiander befördert, so dass die Lücken d1 zwischen den Artikeln A geschlossen werden und die Artikel A einer Bewegungs-Gruppe G1 gegeneinander angrenzen.

In anderen Worten sind die Mitnehmer-Nasen 42 in einem vorbestimmten Abstand D zueinander angeordnet, so dass, wie in Fig. 1 gezeigt, jeweils nach vier vereinzelten Artikeln A stromaufwärts in Transportrichtung T eine der Mitnehmer-Nasen 42 eingreift, diese in Transportrichtung T zum Ausgang der Gruppierungsvorrichtung 1 hin fördert und diese wegen der höheren Transportgeschwindigkeit des Mitnehmerbandes 45 als die Transportgeschwindigkeit der Artikel A zu der Bewegungs-Gruppe G1 zusammenschiebt.

Nachdem die vereinzelten Artikel A mittels der Mitnehmer-Nasen 42 des Mitnehmerbandes 45 zu einer Bewegungs-Gruppe G1 zusammengeführt worden sind, werden die jeweiligen Bewegungs-Gruppen G1 entlang der ersten und der zweiten Neben-Führungsbahn 42.1 und 42.2 über die v-förmig aufeinanderzulaufende Übergangs-Führungsbahnen 43.1 und 42.2 geführt, die sich in einer gemeinsamen Haupt-Führungsbahn 44 vereinigen, so dass die nebeneinander mehrspurig geführten Bewegungs-Gruppen G1 in hintereinander einspurig geführte Verpackungs-Gruppen G2 zusammengeführt werden.

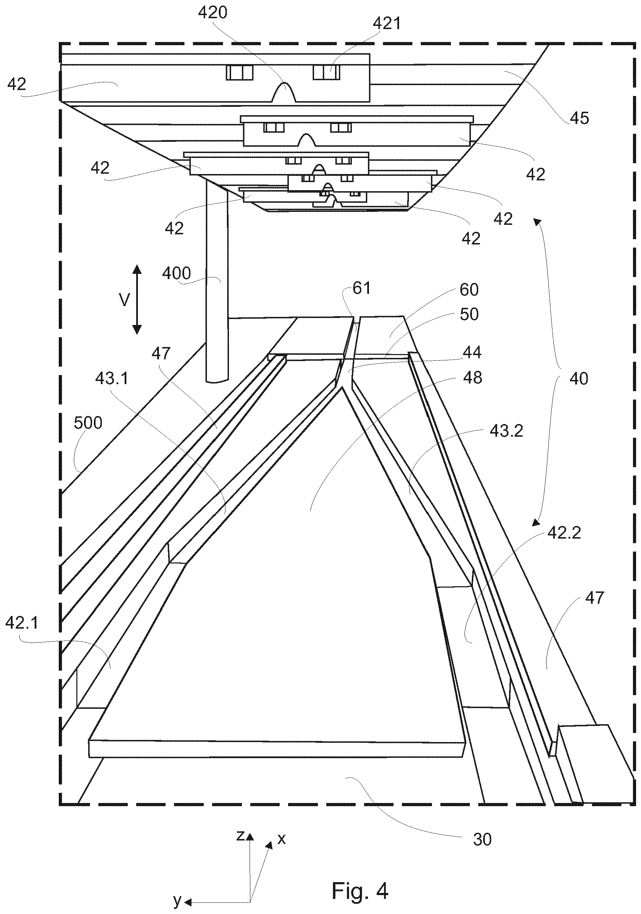

Die jeweiligen Mitnehmer-Nasen 42 erstrecken sich quer zur Transportrichtung T nicht über die gesamte Breite B des Mitnehmerbandes 45 (siehe Figur 4), sondern einerseits mit einem Ende, das über dem Bereich der einen Neben-Führungsbahn 42.1, 42.2 endet und andererseits mit dem andere Ende, das vor der anderen Neben-Führungsbahn 42.2, 42.1 endet, wobei jeweils jede zweite Mitnehmer-Nase 42 jeweils versetzt nur die auf der einen Führungsbahn befindlichen Artikel A einer Bewegungs-Gruppe G1 befördert, wobei aber die auf der gemeinsamen Haupt-Führungsbahn 44 angeordneten Bewegungs-Gruppen G1 hin zum Ausgang 50 als hintereinander angeordnete Verpackungs-Gruppe G2 auf einer einspurigen Förderbahn 44 von allen Mitnehmer-Nasen 42 gefördert werden. Hierfür sind die Mitnehmer-Nasen 42 jeweils um einen Takt bzw. die Länge einer Verpackungs-Gruppe G2 voneinander beabstandet und auch quer zur Transportrichtung seitlich versetzt in Breitenrichtung B des Mitnehmerbandes 45 angeordnet.

Im V-fömigen Übergangsbereich 48 zwischen den der Übergangs-Führungsbahnen 43.1, 43.2 nähern sich die erste und die zweite Neben-Führungsbahn 42.1, 42.2 an, bis sie sich in einer gemeinsamen Haupt-Führungsbahn 44 einspurig vereinen, wobei die Förderung der Artikel A über der Haupt-Führungsbahn 44 von allen Mitnehmer-Nasen 42 hin zum Ausgang 50 der Gruppierungsvorrichtung 1 durchgeführt wird.

In einer anderen Ausführungsform der Beförderungsvorrichtung kann der Übergangsbereiches 48 mit zusätzlichen Ablenkvorrichtungen ausgestattete werden, die den Transport der Bewegungs-Gruppierung G1 im Bereich des Übergangs beider Übergangs-Führungsbahnen 43.1, 43.2 auf die Haupt-Führungsbahn 44 unterstützen. Derartige Ablenkvorrichtungen können beispielsweise separat angetriebene, oder durch Artikelkontakt in ihrer Lageausrichtung veränderliche Weichen bzw. Stellelemente sein.

Des Weiteren sind zur Stabilisierung des Transportverhaltens der Bewegungs-Gruppen G1 im Übergangsbereich 48 vakuumunterstützende Einheiten anwendbar, so dass die in die Haupt-Führungsbahn 44 zu überführende Bewegungs-Gruppe G1 in der vorgesehenen Trabsportrichtung T stabilisiert wird.

Am Ausgang 50 der Gruppierungsvorrichtung 1 werden die in Verpackungs-Gruppen G2 gruppierten Artikel A nicht mehr versetzt nebeneinander, sondern versetzt hintereinander dem Ausgang 50 zugeführt, an dem die Überführungsvorrichtung 60 angrenzt, so dass die die in Verpackungs-Gruppen G2 gruppierten Artikel A mit einem vorbestimmten Zwischenraum im Abstand d3 einer Verpackungsvorrichtung (nicht dargestellt), wie eine Flow-Pack-Verpackungsvorrichtung zugeführt werden können, in der die Verpackungs-Gruppen G2 verpackt werden sollen.

Die hintereinander und zueinander beabstandeten Verpackungs-Gruppen G2 werden durch eine weitere Transportvorrichtung der Verpackungsmaschine zugeführt. Eine Ausführungsvariante ist beispielsweise die Übergabe von den schiebenden Mitnehmer-Nasen 42 des Mitnehmerbandes 45 in eine von unten auftauchende Mitnehmerkette, bzw. ein von unten auftauchendes Transportband zur kontinuierlichen Zuführung zur Verpackungsmaschine, beispielsweise einer Flow-Pack-Maschine.

In Fig. 2 ist in einer schematischen, perspektivischen Ansicht die Gruppierungsvorrichtung 1 gezeigt, wobei ein bevorzugt transparentes Gehäuse 100 diese umgibt. Das transparente Gehäuse ist mit gestrichelten Linien angegeben und dient dem Schutz der Gruppierungsvorrichtung 1 und als Schutz vor unsachgemäßen Zugriffen während des Betriebes der Gruppierungsvorrichtung.

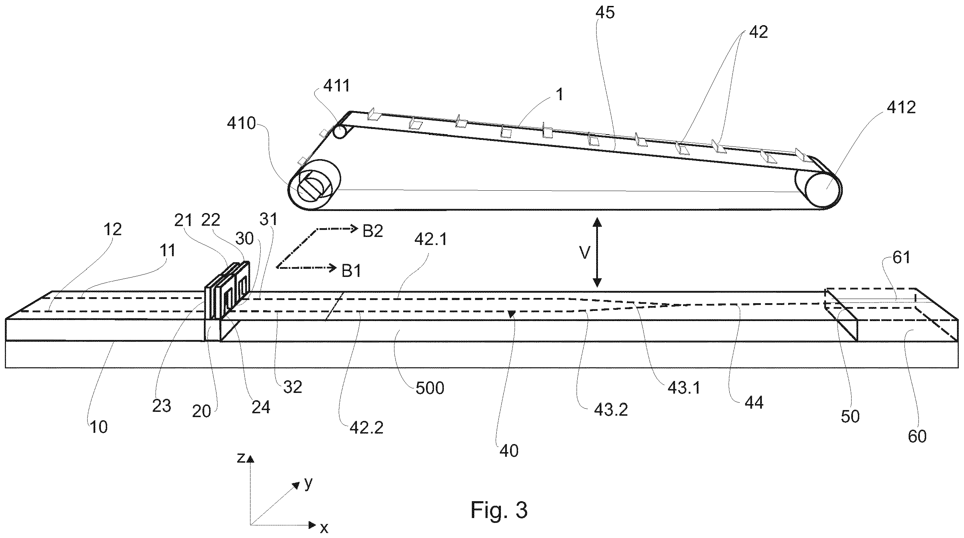

Aus Fign. 2 und 3 ist ferner ersichtlich, dass das Mitnehmerband 45 ein umlaufendes Band bzw. eine umlaufende Förderkette ist, das über eine Antriebswalze 410 und Führungswalzen 411, 412 bewegt wird und über den Führungsbahnen 42.1, 42.2, 43.1, 43.2 und 44 angeordnet ist.

Auf der Außenseite des Mitnehmerbandes 45 das in Bewegungsrichtung den Führungsbahnen 42.1, 42.2, 43.1, 43.2 und 44 zugewandt ist, sind die Mitnehmer-Nasen 42 seitlich alternierend und längs mit einem vorbestimmten regelmäßigen Abstand D zueinander angeordnet.

Die Lage der Mitnehmer-Nasen 42 kann an dem Mitnehmerband 45 verstellt werden, so dass beispielsweise unterschiedliche Verpackungs-Gruppierungen G2 mit einer unterschiedlichen Anzahl n von Artikeln A erstellt werden können. Hierfür wird die Lage und der Abstand D zwischen den Mitnehmer-Nasen 42 verändert.

Fig. 3 zeigt in einer perspektivischen Ansicht die Gruppierungsvorrichtung 1, wobei das Gehäuse 100 zuvor entfernt worden ist und das Mitnehmerband 45 in einem Abstand in Vertikalrichtung V zu den Führungsbahnen 42.1, 42.2, 43.1, 43.2 und 44 bewegt worden ist.

Das Mitnehmerband 45 ist in einer Vertikalrichtung V zu den Führungsbahnen 42.1, 42.2, 43.1, 43.2 und 44 mittels einer Hebevorrichtung 400 (siehe Fig. 4) wegfahrbar, so dass die Führungsbahnen 42.1, 42.2, 43.1, 43.2 und 44 und die Unterseite des Mitnehmerbandes 45 gereinigt und gewartet werden können.

Fig. 4 zeigt in einer schematischen, perspektivischen Detailansicht nach der Blickrichtungsführung B1-B2 von Fig. 3 das Mitnehmerband 45 in einer von den Führungsbahnen 42.1, 42.2, 43.1, 43.2 und 44 beabstandete Position, wobei die Ansichtsrichtung vom Eingang 30 hin zum Ausgang 50 der in Fig. 3 dargestellten Gruppierungsvorrichtung 1 geht. Aus der Ansicht von Figur 4 ist der v-förmige Übergangsbereich 48 zu erkennen, in dem sich die zunächst im Wesentlichen zueinander parallel erstreckenden Neben-Führungsbahnen 42.1, 42.2 sich in den Übergangs-Führungsbahnen 43.1, 43.2 annähern und in einer Hauptführungsbahn 44 von mehrspurig zu einspurig vereinigen.

Seitlich neben den jeweiligen Führungsbahnen 42.1, 42.2, 43.1, 43.2 und 44 sind an der Basis 500 der Beförderungsvorrichtung 40 Stützschienen 47, beispielsweise verschleißfeste Auflageleisten, vorgesehen, die die Lücke zwischen dem Mitnehmerband 45 und der Basis 500 abdecken, wenn das Mitnehmerband aus der in Fig. 4 gezeigten Reinigungs- und Wartungsposition zurück in der in Fig. 2 dargestellt Förderbereitschaftsposition bewegt worden ist und sich in der Förderbereitschaftsposition befindet, so dass die Artikel A mittels des Mitnehmerbandes 45 transportiert werden können.

Aus Fig. 4 ist ferner ersichtlich, dass die Mitnehmer-Nasen 42 jeweils versetzt zueinander auf dem bewegbaren Endlos-Mitnehmerband 45 angeordnet sind. Außerdem ist zu erkennen, dass die Mitnehmer-Nasen 42 L-förmige Winkel sind, die mit einem Winkelschenkel an dem Förderband mittels Schraubverbindungen 421 lösbar an dem Mitnehmerband 45 befestigt sind, wobei die Ausführung der Befestigung der Mitnehmer-Nasen 42 an dem Mitnehmerband 45 auch anders realisiert werden kann. Beispielsweise können zum Befestigen der Mitnehmer-Nasen 42 lösbare Klemm-, Steck-, und oder Schnappverbindungen vorgesehen sein, deren jeweilige Kupplungsabschnitte einerseits an dem Mitnehmerband 45 und andererseits an der Mitnehmer-Nasen 42 ausgebildet sind. In einer anderen Ausführungsform können die Mitnehmer-Nasen 42 auch mittels unlösbaren Verbindungen, wie beispielsweise Schweißverbindungen oder Nietverbindungen an dem Mitnehmerband 45 angebracht sein.

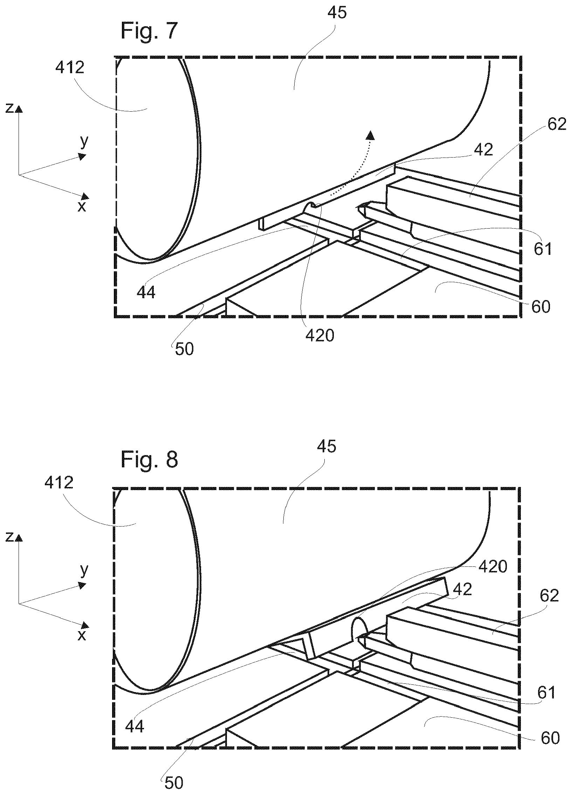

Ferner weisen die Mitnehmer-Nasen 42 auf Höhe der Mittellinie des Mitnehmerbandes 45 eine Ausnehmung 420 auf, in die ein Abschnitt eines höhenverstellbaren Ablenkers 62 (siehe Figuren 7 und 8) am Ausgang 50 der Gruppierungsvorrichtung 1 eingreifen kann.

Das Mitnehmerband 45 wird schneller bewegt als eine Zuführung der Artikel A stattfindet, so dass ein Zusammenschieben der nicht aneinander angrenzenden Artikel A durch die schiebende Bewegung der Mitnehmer-Nasen 42 erfolgt. Die Bildung der Bewegungs-Gruppierung G1 der jeweiligen Artikel A startet hintereinander und versetzt auf den beiden Förderbahnen 31, 32, an die die Nebenführungsbahnen 42.1 und 42.2 angrenzen.

Die Mitnehmer-Nasen 24 fördern die Bewegungs-Gruppierung G1 auf die Neben-Führungsbahnen 42.1, 42.2. Ein Zusammenführen der Bewegungs-Gruppe G1 erfolgt auf den Übergangs-Führungsbahnen 43.1, 43.2 und durch die Förderbewegung der Mitnehmer-Nasen 42 auf einen nicht bewegten, v-förmig ausgebildeten Übergangsbereich 48 (siehe Fig. 5) in die Hauptführungsbahn 44.

Die gruppierten Artikel A in der Bewegungs-Gruppe G1 werden von den Mitnehmer-Nasen 42 des Mitnehmerbandes 45 und den Führungsbahnen 42.1, 42.2, 43.1, 43.2 auf eine gemeinsame Mitte M hin zu der Hauptführungsbahn 44 zu bewegt und durch das Zusammenwirken des Mitnehmerbandes 45 bzw. den Mitnehmer-Nasen 42 und den Führungsbahnen 42.1, 42.2, 43.1, 43.2 und 44 in Verpackungs-Gruppen G2 angeordnet. Die Verpackungs-Gruppen 42 werden über die Überführungsvorrichtung 60 zum weiteren Verpacken bereitgestellt.

Fig. 5 zeigt in einer schematischen, perspektivischen Detailansicht den Eingang 30 der in Fig. 2 dargestellte Gruppierungsvorrichtungen 1, wobei die Zuführungsvorrichtung 10 der Mehrzahl von zu gruppierenden Artikel A, die Vereinzelungsvorrichtung 20 und ein Abschnitt der Beförderungsvorrichtung 40 mit den Förderbahnen 31, 32, den beginnenden Führungsbahnen 42.1, 42.2, und dem Mitnehmerband 45 gezeigt sind.

Die Zuführbahnen 11, 12 weisen an ihren seitlichen Längsrändern in Transportrichtung T bzw. in Vorrichtungslängsrichtung X Teilabdeckungen 117, 118 auf, die den Durchgangsweg bzw. die Spur der jeweiligen Förderbahn 11, 12 wenigstens teilweise bedecken, so dass die in den Förderbahnen angestauten Artikel A nicht aus den Förderbahnen 11, 12 durch den Anstau der Artikel A hinaus gedrängt werden.

Nach den Vereinzelungssensoren 21, 22, 23, 24, können zur Unterstützung der Förderbewegung aus der Vereinzelungsvorrichtung hin zu den Mintnehmernasen des Mitnehmerbandes 45 in der Spur der jeweiligen Förderbahn 31 und 32 Durchgangsöffnungen 425 zum Ausbilden eines Unterdrucks (Vakuums) vorgesehen sein, um die Artikel besser in der Spur der jeweiligen Förderbahnen zu halten, wie in Fig. 5 angedeutet. Die Durchgangsöffnungen 425 für die Vakuumförderung können auch in den jeweiligen Spuren der Vereinzelungsvorrichtung 20 als auch in den jeweiligen Spuren der Förderbahnen 11, 12 der Zuführvorrichtung 10 ausgebildet sein. Durch die Durchgangsöffnungen wird ein Unterdruck erzeugt, so dass die in der Spur befindlichen Artikel A in Transportrichtung T auf der Spur und lagegenau bleiben.

Fig. 6 zeigt in einer schematischen, perspektivischen Detailansicht den Ausgangs 50 der in Fig. 2 dargestellte Gruppierungsvorrichtungen 1, die an die Überführungsvorrichtung 60 mit einem höhenverstellbaren Ablenker 62 grenzt.

Die Fign. 7 und 8 zeigen das Zusammenwirken eines höhenverstellbaren Ablenkers 62, der oberhalb der Förderbahn 61 der Überführungsvorrichtung 60 angeordnet ist, mit der Ausnehmung 420, die in jedem der Mitnehmer-Nasen 42 ausgebildet ist.

Am Ausgang 50 der Beförderungsvorrichtung 40 nach dem Mitnehmerband 45 erfolgt eine Übergabe der Verpackungsgruppe G2 mittels der Mitnehmer-Nase 42, deren Bewegungsrichtung in Fig. 7 mit einem Pfeil dargestellt an einen von unten auftauchenden Mitnehmer (nicht dargestellt) in die Förderbahn 61 der Überführungsvorrichtung 60 die die in den Verpackungs-Gruppen G2 gruppierten Artikel A kontinuierlich einer Verpackungsvorrichtung, insbesondere einer Flow-Packmaschine zuführt. Der höhenverstellbare Ablenker 62 soll sicherstellen, dass die Verpackungs-Gruppen G2 durch die Übergabe von der Mitnehmer-Nase 42 auf den unteren Mitnehmer (ohne Bezugszeichen) der Überführungsvorrichtung 60 nicht aus der Spur der Förderbahn 61 der Überführungsvorrichtung 60 gehoben werden.

## Patentansprüche

1. Gruppierungsverfahren zum Erzeugen und Zusammenführen von Gruppen (G) von Artikeln (A) aus einer Mehrzahl von Artikeln (A), insbesondere kleinstückigen Artikeln, wie Hart- oder Weichkaramellen bzw. Schokoladenstücken, Pralinen oder dergleichen, die mehrspurig zugeführt und mehrspurig vereinzelt oder gruppiert werden und dann mehrspurig in quer zur Transportrichtung (T) alternierend angeordneten Bewegungs-Gruppen (G1) angeordnet werden, wobei die alternierend angeordneten Bewegungs-Gruppen (G1) in hintereinander in Transportrichtung (T) mit einem Abstand versehene Verpackungs-Gruppen (G2) einspurig zusammenführt werden, wobei jede Verpackungs-Gruppe (G2) eine vorbestimmte Anzahl (n) von Artikeln (A) aufweist und mit einem Zwischenraum mit vorbestimmtem Abstand (d3) zur nachfolgenden Verpackungs-Gruppe (G2) bereitgestellt wird, wobei aus einer Mehrzahl von Artikeln (A) jeweils mittels einer Vereinzelungsvorrichtung (20) eine vorbestimmte Anzahl (n) von Artikeln vereinzelt und alterniert an einem Eingang (30) einer Beförderungsvorrichtung (40) bereitgestellt werden, so dass die Mitnehmer-Nasen (42) eines Mitnehmerbandes (45) zwischen jeden vereinzelten Artikel oder nach einem vorbestimmten Intervall von Artikeln in den Zwischenraum mehrerer Artikel (A) greifen können, wobei das Gruppierungsverfahren **dadurch gekennzeichnet ist, dass** eine Transportgeschwindigkeit (v1) der Mitnehmer-Nasen (42) beziehungsweise des Mitnehmerbandes (45) größer ist als eine Transportgeschwindigkeit (v2), mit der die vereinzelten Artikel (A) zugeführt werden, so dass die vereinzelten Artikel (A) seitlich nebeneinander quer zur Transportrichtung und beabstandet hintereinander in Transportrichtung zu dem Ausgang (50) der Beförderungsvorrichtung (40) mehrspurig und gruppenweise mit einer größeren Geschwindigkeit transportiert werden als die Geschwindigkeit, mit der die vereinzelten Artikel (A) zugeführt werden, und die vereinzelten und zueinander beabstandeten Artikel (A) zu einer Bewegungs-Gruppe (G1) mit einer vorbestimmten Anzahl n zusammengefasst werden und die Artikel (A) der Bewegungs-Gruppe (G1) gegeneinander angrenzen, indem die vereinzelten Artikel (A) mit einer erhöhten Geschwindigkeit in Transportrichtung (T) hintereinander zusammengeschoben werden.

2. Gruppierungsverfahren nach Anspruch 1, **dadurch gekennzeichnet, dass** die seitlich quer zur Transportrichtung mehrspurig und hintereinander angeordneten und gruppierten Artikel (A) zum Ausgang der Beförderungsvorrichtung (40) hin zu Verpackungs-Gruppen (G2) zusammengeführt werden, die in Transportrichtung (T) hintereinander und zueinander beabstandet sind.

3. Gruppierungsvorrichtung (1) zum Erzeugen und Zusammenführen von Gruppen (G1, G2) von Artikeln (A), insbesondere kleinstückigen Artikeln, wie Hart- oder Weichkaramellen bzw. Schokoladenstücken, Pralinen oder dergleichen, aus einer Mehrzahl von Artikeln (A), die Gruppierungsvorrichtung (1) umfassend eine Beförderungsvorrichtung (40), mehrspurig nebeneinander angeordnete Förder- und / oder Nebenführungsbahnen (31, 32, 42.1, 42.2), eine Hauptführungsbahn (44) und Übergangs-Führungsbahnen (43.1, 43.2), wobei die Artikel (A) an einem Eingang (30) der Gruppierungsvorrichtung (1) mehrspurig in den nebeneinander angeordneten Förder- und / oder Nebenführungsbahnen (31, 32, 42.1, 42.2) zugeführt werden, wobei die Nebenführungsbahnen (42.1, 42.2) sich in der Hauptführungsbahn (44) vereinen, so dass an dem Ausgang der Gruppierungsvorrichtung (1) die Mehrzahl von Artikeln (A) in einspurig hintereinander in Transportrichtung beabstandete Verpackungs-Gruppen (G2) zusammenführt werden, wobei die Beförderungsvorrichtung (40), die am Eingang (30) bereitgestellten Artikel zunächst mehrspurig und quer zur Transportrichtung (T) alternierend angeordneten Gruppen (G) in den Nebenführungsbahnen (42.1, 42.2) durch Beschleunigen in Bewegungs-Gruppen (G1) mehrspurig anordnet und vor dem Ausgang (50) unter Zusammenwirkung mit den Übergangs-Führungsbahnen (43.1, 43.2) und der Hauptführungsbahn (44) in hintereinander einspurig angeordnete Verpackungs-Gruppen (G2) zusammenführt, wobei jede Verpackungs-Gruppe (G2) eine vorbestimmte Anzahl (N) von Artikeln (A) und einen Zwischenraum mit vorbestimmten Abstand (d3) zur nachfolgenden Verpackungs-Gruppe aufweist, wobei die Gruppierungsvorrichtung (1) **dadurch gekennzeichnet ist, dass** die Beförderungsvorrichtung (40) ein umlaufendes Mitnehmer-Band (45) aufweist, das sich in Transportrichtung (T) benachbart vom Eingang (30) bis benachbart zum Ausgang (50) erstreckt und an dem eine Mehrzahl von Mitnehmer-Nasen (42) angeordnet ist, die sich quer zur Transportrichtung und alternierend aus dem Mitnehmer-Band (45) erstrecken, so dass die Mitnehmer-Nasen (42) jeweils alternierend eine erste und zweite Förderbahn (31, 32) und die jeweilige Nebenführungsbahn (42.1, 42.2) überstreichen, und alle Mitnehmer-Nasen (42) die Hauptführungsbahn (44) überstreichen, um auf der jeweiligen Nebenführungsbahn (42.1, 42.2) und auf der Hauptführungsbahn (44) vorhandene Artikel (A) mitzuführen und / oder zu beschleunigen und um einen möglichen Abstand (d1) zwischen den in den Gruppen G befindlichen Artikeln (A) im Bereich der Förderbahnen (31, 32) sowie auf den Neben-Führungsbahnen (42.1, 42.2) aufzuheben.

4. Gruppierungsvorrichtung (1) nach Anspruch 3, **dadurch gekennzeichnet, dass** die Beförderungsvorrichtung (40) wenigsten eine erste Nebenführungsbahn (31, 42.1) und eine zweite Nebenführungsbahn (32, 42.2) aufweist, die stromaufwärts zur Transportrichtung zu dem Eingang (30) hin im Wesentlichen mehrspurig und parallel zueinander verlaufen sich in Transportrichtung (T) in einer gemeinsamen Hauptführungsbahn (44) einspurig vereinigen.

5. Gruppierungsvorrichtung (1) nach wenigstens einem der Ansprüche 3 bis 4, **dadurch gekennzeichnet, dass** angrenzend zum Eingang (30) der Gruppierungsvorrichtung (1) eine Vereinzelungsvorrichtung (20) angeordnet ist, die die Mehrzahl von Artikeln (A) der ersten und der zweiten Förderbahn (31, 32) vereinzelt und zeitlich versetzt der Gruppierungsvorrichtung (1) zuführt.

6. Verpackungsvorrichtung zum Verpacken von gruppierten Artikeln (A) aus hintereinander beabstandeten Verpackungs-Gruppen (G2), wobei die Verpackungsvorrichtung eine Gruppierungsvorrichtung (1) nach wenigstens einem der Ansprüche 3 bis 5 zum Erzeugen und Zusammenführen von Gruppen (G) von Artikeln (A) aus einer Mehrzahl von Artikeln (A), aufweist.

## Claims

1. Grouping method for generating and bringing together groups (G) of items (A) from a plurality of items (A), in particular small-sized items such as hard or soft caramels or chocolate pieces, pralines or the like, which are fed in multiple tracks and are separated or grouped in multiple tracks and then arranged in multiple tracks in motion groups (G1) arranged alternately transversely to the transport direction (T), wherein the alternately arranged motion groups (G1) are brought together in one track in packaging groups (G2) provided one behind the other in transport direction (T) with a spacing, wherein each packaging group (G2) has a predetermined number (n) of items (A) and is provided with an intermediate space with a predetermined spacing (d3) to the subsequent packaging group (G2), wherein a predetermined number (n) of items are respectively separated from a plurality of items (A) by means of a separating device (20) and alternately provided at an entrance (30) of a conveying device (40), so that the carrier noses (42) of a carrier belt (45) can engage between each separated item or after a predetermined interval of items into the space between a plurality of items (A), the grouping method **being characterized in that** a transport speed (v1) of the carrier noses (42) or the carrier belt (45) is greater than a transport speed (v2) at which the separated items (A) are fed, so that the separated items (A) are transported laterally side by side transversely to the transport direction and spaced one behind the other in transport direction to the exit (50) of the conveying device (40) in multiple tracks and in groups at a higher speed than the speed at which the separated items (A) are fed, and the separated and mutually spaced-apart items (A) are combined to form a motion group (G1) with a predetermined number n and the items (A) of the motion group (G1) are adjacent to one another by the separated items (A) being pushed together at an increased speed in transport direction (T) one behind the other.

2. Grouping method according to claim 1, **characterized in that** the items (A), which are arranged and grouped laterally transversely to the transport direction in multiple tracks and one behind the other, are brought together to the exit of the conveying device (40) to form packaging groups (G2) which are arranged one behind the other and spaced apart from one another in transport direction (T).

3. Grouping device (1) for generating and bringing together groups (G1, G2) of items (A), in particular small-sized items, such as hard or soft caramels or chocolate pieces, pralines or the like, from a plurality of items (A), the grouping device (1) comprising a conveying device (40), conveyor and/or secondary guide lanes (31, 32, 42.1, 42.2) arranged in multiple tracks side by side, a main guide lane (44) and transition guide lanes (43.1, 43.2), wherein the items (A) are fed at an entrance (30) of the grouping device (1) in multiple tracks in the conveyor and/or secondary guide lanes (31, 32, 42.1, 42.2) arranged side by side, wherein the secondary guide lanes (42.1, 42.2) unite in the main guide lane (44), so that at the exit of the grouping device (1) the plurality of items (A) are brought together in packaging groups (G2) spaced apart in one track one after the other in transport direction, wherein the conveying device (40) arranges the items provided at the entrance (30) first in multiple tracks and transversely to the transport direction (T) in alternately arranged groups (G) in the secondary guide lanes (42.1, 42.2) by acceleration in motion groups (G1) in multiple tracks and brings them together in front of the exit (50) by cooperation with the transition guide lanes (43.1, 43.2) and the main guide lane (44) in packaging groups (G2) arranged one behind the other in one track, wherein each packaging group (G2) comprises a predetermined number (N) of items (A) and an intermediate space with a predetermined spacing (d3) to the subsequent packaging group, wherein the grouping device (1) **is characterized in that** the conveying device (T) comprises a surrounding carrier belt (45) which extends in transport direction (T) adjacently from the entrance (30) adjacently to the exit (50) and has arranged thereon a plurality of carrier noses (42) which extend transversely to the transport direction and alternately from the carrier belt (45), so that the carrier noses (42) are each alternately sweeping over a first and second conveyor lane (31, 32) and the respective secondary guide lane (42.1, 42.2), and all carrier noses (42) sweep over the main guide lane (44) to carry along and / or accelerate items (A) present on the respective secondary guide lane (42.1, 42.2) and on the main guide lane (44) and to eliminate a possible spacing (d1) between the items (A) present in the groups G in the area of the conveyor lanes (31, 32) and on the secondary guide lanes (42.1, 42.2).

4. Grouping device (1) according to claim 3, **characterized in that** the conveying device (40) comprises at least a first secondary guide lane (31, 42.1) and a second secondary guide lane (32, 42.2) which extend upstream of the transport direction towards the entrance (30) substantially in multiple tracks and parallel to one another and unite in transport direction (T) in a common main guide lane (44) in one track.

5. Grouping device (1) according to at least one of claims 3 to 4, **characterized in that** a separating device (20) is arranged adjacent to the entrance (30) of the grouping device (1), which feeds the plurality of items (A) of the first and the second conveyor lane (31, 32) separately and temporally staggered to the grouping device (1).

6. Packaging device for packaging grouped items (A) from packaging groups (G2) spaced one behind the other, the packaging device comprising a grouping device (1) according to at least one of claims 3 to 5 for generating and bringing together groups (G) of items (A) from a plurality of items (A).

## Revendications

1. Procédé de regroupement pour produire et rassembler des groupes (G) d'articles (A) constitués d'une pluralité d'articles (A), notamment d'articles de petites dimensions, comme des caramels durs ou mous, des pièces de chocolat, des pralines ou similaires, qui sont amenés selon plusieurs pistes et sont séparés ou groupés selon plusieurs pistes, et sont ensuite agencés, selon plusieurs pistes, en groupes de mouvement (G1) disposés de manière alternée transversalement à la direction de transport (T), procédé
d'après lequel les groupes de mouvement (G1) agencés de manière alternée sont rassemblés sur une seule piste les uns à la suite des autres, en groupes d'emballage (G2) présentant dans la direction de transport (T) une distance d'espacement,
d'après lequel chaque groupe d'emballage (G2) présente un nombre (n) prédéterminé d'articles (A) et est fourni avec un espace intermédiaire de distance d'espacement (d3) prédéterminée par rapport au groupe d'emballage (G2) suivant,
d'après lequel à partir d'une pluralité d'articles (A), un nombre (n) prédéterminé d'articles sont séparés respectivement au moyen d'un dispositif séparateur (20), et sont fournis de manière alternée à l'entrée (30) d'un dispositif de transport (40), de manière à ce que les taquets-entraîneurs (42) d'une bande d'entraînement (45) puissent s'engager entre chaque article séparé, ou bien, après un intervalle prédéterminé d'articles, dans l'espace intermédiaire de plusieurs articles (A),
le procédé de regroupement étant
**caractérisé en ce qu'**une vitesse de transport (v1) des taquets-entraîneurs (42), à savoir de la bande d'entraînement (45), est plus grande qu'une vitesse de transport (v2) avec laquelle sont amenés les articles (A) séparés, de sorte que les articles (A) ayant été séparés sont transportés, latéralement les uns à côté des autres transversalement à la direction de transport et de manière espacée les uns à la suite des autres dans la direction de transport, vers la sortie (50) du dispositif de transport (40), selon plusieurs pistes et par groupe, avec une vitesse plus grande que la vitesse avec laquelle les articles (A) séparés sont amenés, et les articles (A) séparés et espacés les uns par rapport aux autres sont rassemblés en un groupe de mouvement (G1) d'un nombre (n) prédéterminé d'articles, et les articles (A) du groupe de mouvement (G1) sont mutuellement adjacents grâce au fait que les articles (A) séparés sont rassemblés les uns derrière les autres avec une vitesse augmentée dans la direction de transport (T).

2. Procédé de regroupement selon la revendication 1, **caractérisé en ce que** les articles (A) agencés latéralement de manière transversale à la direction de transport, selon plusieurs pistes, et les uns à la suite des autres et de façon groupée, sont conduits et rassemblés, à la sortie du dispositif de transport (40), en groupes d'emballage (G2), qui, dans la direction de transport (T), se succèdent et sont espacés les uns par rapport aux autres.

3. Dispositif de regroupement (1) pour produire et rassembler des groupes (G1, G2) d'articles (A), notamment d'articles de petites dimensions, comme des caramels durs ou mous, des pièces de chocolat, des pralines ou similaires, constitués d'une pluralité d'articles (A), le dispositif de regroupement (1) comprenant un dispositif de transport (40), des voies de transport et/ou de guidage auxiliaires (31, 32, 42.1, 42.2) agencées côte à côte selon plusieurs pistes, une voie de guidage principale (44) et des voies de guidage de transition (43.1, 43.2), dispositif de regroupement dans lequel les articles (A), au niveau d'une entrée (30) du dispositif de regroupement (1), sont amenés selon plusieurs pistes aux voies de transport et/ou de guidage auxiliaires (31, 32, 42.1, 42.2) agencées côte à côte,
dans lequel les voies de guidage auxiliaires (42.1, 42.2) se réunifient dans la voie de guidage principale (44), de sorte qu'à la sortie du dispositif de regroupement (1), la pluralité d'articles (A) sont rassemblés en groupes d'emballage (G2) espacés les uns à la suite des autres dans la direction de transport, sur une seule piste,
dans lequel le dispositif de transport (40) agence tout d'abord, selon plusieurs pistes, les articles fournis à l'entrée (30), en groupes de mouvement (G1) dans les voies de guidage auxiliaires (42.1, 42.2), par accélération des groupes (G) agencés selon plusieurs pistes et de manière alternée transversalement à la direction de transport (T), et les rassemble ensuite avant la sortie (50), par interaction avec les voies de guidage de transition (43.1, 43.2) et la voie de guidage principale (44), en groupes d'emballage (G2) agencés les uns à la suite des autres selon une seule piste,
dans lequel chaque groupe d'emballage (G2) présente un nombre (N) prédéterminé d'articles (A) et un espace intermédiaire de distance d'espacement (d3) prédéterminée par rapport au groupe d'emballage suivant, le dispositif de regroupement (1) étant **caractérisé en ce que** le dispositif de transport (40) comprend une bande d'entraînement (45) en révolution, qui s'étend, dans la direction de transport (T), du voisinage de l'entrée (30) jusqu'au voisinage de la sortie (50), et sur laquelle sont agencés une pluralité de taquets-entraîneurs (42), qui s'étendent transversalement et de manière alternée hors de la bande d'entraînement (45), de sorte que les taquets-entraîneurs (42) balayent respectivement de manière alternée une première et une deuxième voie de transport (31, 32) et la voie de guidage auxiliaire (42.1, 42.2) respective, et tous les taquets-entraîneurs (42) balayent la voie de guidage principale (44), pour entraîner et/ou accélérer les articles (A) présents sur la voie de guidage auxiliaire (42.1, 42.2) respective et la voie de guidage principale (44), et pour combler une distance d'espacement (d1) possible, entre les articles (A) se trouvant dans les groupes (G) dans la région des voies de transport (31, 32) ainsi que sur les voies de guidage auxiliaires (42.1, 42.2).

4. Dispositif de regroupement (1) selon la revendication 3, **caractérisé en ce que** le dispositif de transport (40) présente au moins une première voie de guidage auxiliaire (31, 42.1) et une deuxième voie de guidage auxiliaire (32, 42.2), qui, en amont en se référant à la direction de transport, vers l'entrée (30), s'étendent sensiblement selon plusieurs pistes et parallèlement les unes aux autres, et se réunissent dans la direction de transport (T) en une voie de guidage principale (44) commune, selon une seule piste.

5. Dispositif de regroupement (1) selon l'une au moins des revendications 3 à 4, **caractérisé en ce que** qu'au voisinage de l'entrée (30) du dispositif de regroupement (1), est agencé un dispositif séparateur (20), qui amène la pluralité d'articles (A) de la première et de la deuxième voie de transport (31, 32), en étant séparés les uns des autres et de manière décalée dans le temps, au dispositif de regroupement (1) .

6. Dispositif d'emballage pour emballer des articles (A) regroupés de groupes d'emballage (G2) se succédant en étant espacés les uns des autres, le dispositif d'emballage comprenant un dispositif de regroupement (1) selon l'une au moins des revendications 3 à 5, pour produire et rassembler des groupes (G) d'articles (A) constitués d'une pluralité d'articles (A) .
